# EUROPÄISCHE PATENTANMELDUNG

(11) **EP 0 538 232 A1**
(43) Veröffentlichungstag der Anmeldung: **21.04.1993**
(21) Anmeldenummer: 92890184.2
(22) Anmeldetag: 18.08.1992
(51) Int. Cl.: B21F 27/10, B23K 11/00

(54) **Verfahren zum Herstellen von Drahtgittern**

(30) Priorität: 05.09.1991 AT 1759/91
(71) Anmelder: EVG Entwicklungs- u. Verwertungs- Gesellschaft m.b.H., A-8042 Raaba (AT)
(72) Erfinder: Ritter, Klaus, Dipl.-Ing., A-8042 Graz (AT); Ritter, Gerhard, Dipl.-Ing. Dr., A-8043 Graz (AT); Scherr, Rudolf, Dipl.-Ing., A-8045 Graz (AT); Jahrbacher, Gert, Dipl.-Ing., A-8120 Peggau 163 (AT)
(74) Vertreter: Holzer, Walter, Dipl.-Ing.

(57) **Zusammenfassung**

Verfahren zum Herstellen von Drahtgittern aus einander rechtwinkelig kreuzenden Längs-(L) und Querdrähten (Q) unter Anwendung des Doppelpunktschweißprinzips mit in Längsdrahtrichtung verlaufenden Strombrücken (4), bei welchem wahlweise Querdrahtpaare oder einzelne Querdrähte entlang zweier, in vorbestimmtem Abstand angeordneter, quer zur Längsdrahtvorschubrichtung verlaufender Einschußkanäle auf einer Seite der durch die Längsdrahtschar definierten Längsdrahtzuführebene in quer zur Längsdrahtvorschubrichtung (7) mit gegenseitigem einstellbarem Abstand verlaufende Schweißlinien aus jeweils zwei oberhalb und unterhalb der Längsdrahtzuführebene vorgesehenen Schweißelektrodenreihen (2,3) übergeführt werden, wobei die Längsdrähte um eine wählbare Vorschubstrecke mit zur Überführbewegung der Querdrähte unterschiedlicher Dauer und Geschwindigkeit vorgeschoben werden und beim Verschweißen nur eines Querdrahtes mit den Längsdrähten die unterschiedliche Materialstärke in den beiden Schweißlinien beim Schweißvorgang durch Lageveränderung zumindest einer Elektrodenreihe relativ zu den übrigen Elektrodenreihen ausgeglichen wird, worauf das fertige Drahtgitter nach dem Verschweißen der Drähte aus den Schweißlinien ausgeschoben wird.

## Beschreibung

Die Erfindung betrifft ein Verfahren zum Herstellen von Drahtgittern aus einander rechtwinkelig kreuzenden Längsund Querdrähten unter Anwendung des Doppelpunktschweißprinzips mit in Längsdrahtrichtung verlaufenden Strombrücken, bei welchem die Querdrähte entlang zweier, in vorbestimmtem Abstand angeordneter, quer zur Längsdrahtvorschubrichtung verlaufender Einschußkanäle seitlich zugeführt und anschließend auf einer Seite der durch die Längsdrahtschar definierten Längsdrahtzuführebene in quer zur Längsdrahtvorschubrichtung mit gegenseitigem einstellbaren Abstand verlaufenden Schweißlinien aus jeweils zwei oberhalb und unterhalb der Längsdrahtzuführebene vorgesehenen Schweißelektrodenreihen übergeführt werden, wobei die Längsdrähte mit zur Überführbewegung der Querdrähte unterschiedlicher Dauer und Geschwindigkeit vorgeschoben werden und das fertige Drahtgitter nach dem Verschweißen der Drähte aus den Schweißlinien ausgeschoben wird.

Gemäß einem nicht vorveröffentlichten älteren Vorschlag werden die beiden Querdrähte gemeinsam über vor den Schweißlinien angeordnete Einschußkanäle zugeführt und mittels einer Überführeinrichtung in die Schweißlinien übergeführt. Die Längsdrähte werden den Schweißlinien mittels einer Längsdrahtvorschubeinrichtung zugeführt, die auch das geschweißte Drahtgitter aus den Schweißlinien ausschiebt, wobei die Geschwindigkeit der Vorlaufbewegung der Querdrahtüberführeinrichtung und die Geschwindigkeit des Arbeitstaktes der Längsdrahtvorschubeinrichtung unterschiedlich groß sind, und die Dauer der durch die Überführeinrichtung bewirkten Vorlaufbewegung der Querdrähte größer als die Dauer des Arbeitstaktes der Längsdrahtvorschubeinrichtung ist. Bei dem Doppelpunktschweißverfahren nach dem älteren Vorschlag können aber jeweils nur Querdrahtpaare gemeinsam mit den Längsdrähten verschweißt werden, so daß aus den Drahtgittern nur Gittermatten mit gerader Querdrahtanzahl herstellbar sind. Außerdem können Drahtgitter mit Querdrahtabständen, die größer als der maximal mögliche Abstand der Schweißlinien sind, nicht hergestellt werden.

Aufgabe der Erfindung ist es, ein verbessertes Verfahren zu schaffen, das es ermöglicht, Drahtgitter mit jeder beliebigen Querdrahtteilung und Gittermatten mit jeder beliebigen Querdrahtanzahl herzustellen. Außerdem soll bei Ausfall eines der beiden Querdrahtzuführkanäle eine kontinuierliche Drahtgitterproduktion gewährleistet werden. Dies wird erfindungsgemäß dadurch erreicht, daß über die Einschußkanäle wahlweise Querdrahtpaare oder einzelne Querdrähte zugeführt, in die Schweißlinie übergeführt und mit den Längsdrähten verschweißt werden, wobei die Längsdrähte um eine wählbare Vorschubstrecke vorgeschoben werden und wobei beim Verschweißen nur eines Querdrahtes mit den Längsdrähten die unterschiedliche Materialstärke in den beiden Schweißlinien beim Schweißvorgang durch Lageveränderung zumindest einer Elektrodenreihe relativ zu den übrigen Elektrodenreihen ausgeglichen wird.

Gemäß einer bevorzugten Ausführungsform des Verfahrens erfolgt die Lageveränderung der Elektrodenreihe durch Verschwenken von die Elektroden der beiden Elektrodenreihen auf einer Seite der Längsdrahtzuführebene fest und elektrisch leitend verbindenden Strombrücken um eine quer zur Längsdrahtvorschubrichtung verlaufende Drehachse. Alternativ erfolgt die Lageveränderung der Elektrodenreihe durch Höhenverschiebung jener auf der Querdrahtzuführseite der Längsdrahtzuführebene befindlichen Elektrodenreihe der Schweißlinie, in welcher der Querdraht fehlt.

Das erfindungsgemäße Verfahren findet zweckmäßig immer dann Anwendung, wenn bei der Herstellung von Drahtgittern mit Hilfe des Doppelpunktschweißprinzips anstelle von Querdrahtpaaren nur ein einzelner Querdraht mit den Längsdrähten verschweißt werden soll. Insbesondere gilt dies für folgende Anwendungsfälle:
- Herstellung von Gittermatten mit ungerader Querdrahtanzahl,
- Herstellung von Drahtgittern mit Querdrahtteilungen, die größer als der maximale Schweißlinienabstand sind,
- Herstellung von Drahtgittern während einer der beiden Querdrahteinschußkanäle außer Funktion ist, beispielsweise bei Fehlen von Querdrahtmaterial und Neubestückung eines Einschußkanales mit Querdrahtmaterial oder sonstige Störungen in einem der Einschußkanäle der Querdrahtzuführeinrichtung.

Außerdem findet das erfindungsgemäße Verfahren Anwendung bei der Herstellung von Gittermatten mit gerader Querdrahtanzahl und ungleichmäßigen Querdrahtabständen, bei denen ein paarweises Verschweißen der Querdrähte auf Grund der ungleichmäßigen Querdrahtteilung nicht möglich ist.

Die Erfindung wird nachfolgend in einem Ausführungsbeispiel unter Bezugnahme auf die Zeichnungen näher erläutert:
Fig. 1 zeigt in einer Seitenansicht schematisch eine Schweißmaschine während des Verschweißens eines einzelnen Querdrahtes und
Fig. 2 die Schweißmaschine während des nachfolgenden, gleichzeitigen Verschweißens zweier Querdrähte mit der Längsdrahtschar.

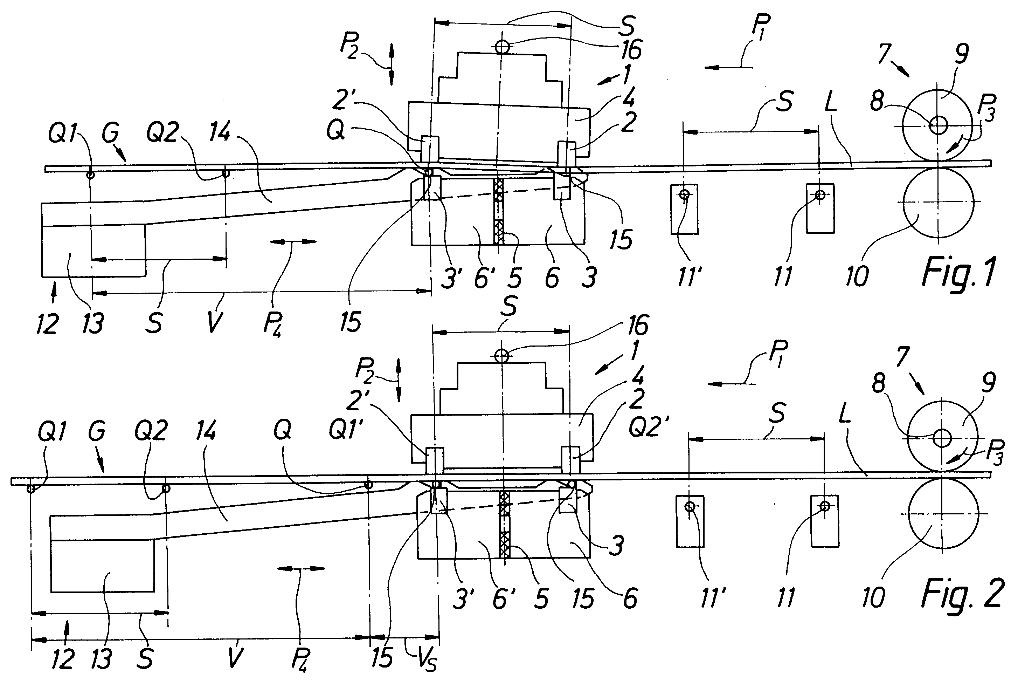

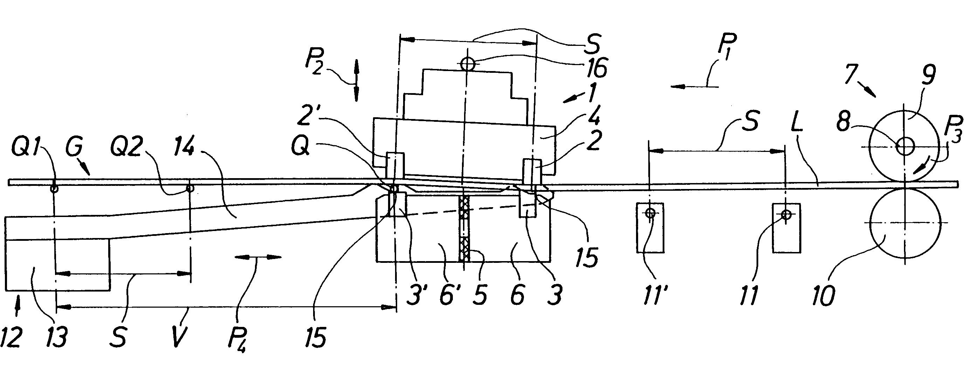

Gemäß den Fig. 1 und 2 wird einer Schweißmaschine 1 von nicht dargestellten Vorratstrommeln eine Schar von Längsdrähten L in Richtung des Pfeiles P₁ zugeführt. Die Schweißmaschine 1 arbeitet nach dem Doppelpunktschweißprinzip und ist befähigt, sowohl einen einzelnen Querdraht Q, wie in Fig. 1 dargestellt, als auch gleichzeitig ein aus zwei Querdrähten Q1 und Q2 bestehendes Querdrahtpaar, wie in Fig. 2 dargestellt, mit der Längsdrahtschar zu verschweißen.

Entlang zweier, quer zur Längsdrahtvorschubrichtung P₁ verlaufender, in einstellbarem Abstand S zueinander angeordneter Schweißlinien sind jeweils zwei Reihen von Oberelektroden 2, 2′ und von Unterelektroden 3, 3′ oberhalb bzw. unterhalb einer durch die Längsdrahtschar definierten Zuführebene angeordnet. Während die Oberelektroden 2, 2′ vorzugsweise mittig zu den Schweißlinien angeordnet sind, werden die Unterelektroden 3, 3′ vorzugsweise gegenüber den entsprechenden Schweißlinien versetzt angeordnet, um nach Verschleiß eines Teiles der Elektrodenflächen durch Wenden der Elektroden ein unverbrauchtes Teil der Elektrodenfläche in Arbeitsstellung bringen und damit die Lebensdauer der Unterelektroden erhöhen zu können.

Die Oberelektroden 2 der einen Reihe sind mit den Oberelektroden 2′ der anderen Reihe jeweils über eine in Längsdrahtvorschubrichtung P₁ verlaufende Strombrücke 4 fest und elektrisch leitend verbunden, während die zugeordneten Unterelektroden 3 bzw. 3′ über entsprechende, durch ein Isolierstück 5 getrennte Elektrodenhalter 6, 6′ mit den Anschlüssen einer nicht dargestellten Schweißstromversorgung verbunden sind. Die Strombrücken 4 mit den Oberelektroden 2, 2′ werden im Arbeitstakt der Schweißmaschine, beispielsweise mit Hilfe eines nicht dargestellten, allen Strombrücken 4 gemeinsamen Elektrodenbalkens, der über eine nicht gezeigte Steuereinrichtung bewegbar ist, entsprechend dem Doppelpfeil P₂ gehoben und gesenkt.

Mit Hilfe einer Vorschubeinrichtung 7, die im wesentlichen eine unterhalb der Zuführebene angeordnete, in Richtung des Pfeiles P₃ antreibbare Welle 8 sowie mit dieser Welle 8 drehfest verbundene Antriebsrollen 9, deren Anzahl der Anzahl der Längsdrähte entspricht, und an diese Rollen 9 anpreßbare Gegenrollen 10 unterhalb der Zuführebene aufweist, werden die Längsdrähte L in die Schweißlinien vorgeschoben und ein fertig geschweißtes Drahtgitter G aus den Schweißlinien herausgeschoben.

Die Antriebsrollen 9 werden taktweise mit wählbarer Geschwindigkeit und Dauer über die nicht dargestellte Steuereinrichtung der Schweißmaschine angetrieben. Die Vorschubstrecke, welche die Längsdrähte während eines Arbeitstaktes zurücklegen, ist frei wählbar und legt als sogenannte Auszugteilung V die Abstände zwischen den Querdrahtpaaren Q1, Q2, die Abstände zwischen einzeln verschweißten Querdrähten Q, und die Abstände zwischen einem einzelnen Querdraht Q und benachbarten Querdrahtpaaren innerhalb des Drahtgitters fest. Wenn die Vorschubstrecke genau dem doppelten Betrag des Abstandes S der beiden Querdrähte Q1, Q2 innerhalb eines gleichzeitig verschweißten Querdrahtpaares entspricht, entsteht eine gleichmäßige Querdrahtteilung im Drahtgitter. Bei den Ausführungsbeispielen nach den Fig. 1 und 2 ist die Auszugteilung V beispielsweise größer als der doppelte Betrag dieses Abstandes S, so daß eine ungleichmäßige Querdrahtteilung im Drahtgitter entsteht.

Mit Hilfe einer nicht dargestellten Zuführeinrichtung, die im wesentlichen eine Richt-, Vorschub- und Meßeinrichtung sowie eine Schere aufweist, werden der Schweißmaschine seitlich und senkrecht zur Längsdrahtschar entweder ein einzelner Querdraht Q oder gleichzeitig zwei Querdrähte Q1 und Q2 zugeführt. Die Querdrahtzufuhr erfolgt über zwei Einschußkanäle 11, 11′, die in Längsdrahtvorschubrichtung P₁ mit wählbarem Abstand voneinander vor den Schweißlinien quer zur Längsdrahtvorschubrichtung P₁ angeordnet sind und sich über die gesamte Breite der Schweißmaschine erstrecken.

Der gegenseitige Abstand der beiden Einschußkanäle 11, 11′ entspricht dem gegenseitigen Abstand S der Schweißlinien und legt den Abstand der beiden Querdrähte eines gleichzeitig zu verschweißenden Querdrahtpaares Q1, Q1 fest. Mit Hilfe einer Überführeinrichtung 12 werden entweder zwei Querdrähte Q1, Q2 gleichzeitig oder nur ein einzelner Querdraht Q aus den Einschußkanälen 11, 11′ entnommen und in die Schweißlinien befördert.

Die Querdrahtüberführeinrichtung 12 weist im wesentlichen eine entsprechend dem Doppelpfeil P₄ kontinuierlich zwischen einer Querdraht-Aufnahmestellung und einer Querdraht-Abgabestellung hin- und herbewegbaren, schwenkbar gelagerten Auszugbalken 13 auf. Der Auszugbalken 13 liegt in Längsdrahtvorschubrichtung gesehen hinter den Schweißlinien und erstreckt sich über die gesamte Breite der Schweißmaschine 1. Die Bewegungen des Auszugbalkens 13 werden durch eine nicht gezeigte Antriebseinrichtung bewirkt und von der Steuereinrichtung der Schweißmaschine gesteuert. An seiner den Schweißlinien zugekehrten Seite ist der Auszugbalken 13 mit mehreren, in der Querdraht-Aufnahmestellung bis in die Einschußkanäle 11, 11′ auskragenden Zubringerhaken 14 versehen, die je zwischen den Längsdrähten L angeordnet sind und auf Grund der Verschiebe- und Schwenkbewegung des Auszugbalkens 13 eine entsprechende Verschiebe- und Schwenkbewegung ausführen.

Die Zubringerhaken 14 weisen zur Aufnahme der Querdrähte an ihren freien Enden jeweils zwei Ausnehmungen 15 auf, deren gegenseitiger Abstand dem gegenseitigen Abstand der Einschußkanäle 11, 11′ entspricht und die zu Beginn des Arbeitstaktes der Querdraht-Überführeinrichtung 12 genau mit den Einschußkanälen 11, 11′ fluchten. Während der Überführbewegung von den Einschußkanälen 11, 11′ in die Schweißlinien werden die Querdrähte mit Hilfe nicht dargestellter Führungseinrichtungen sicher in den Ausnehmungen 15 gehalten. Nachdem das Querdrahtpaar Q1, Q2 bzw. ein einzelner Querdraht Q durch die Elektroden 2, 2′ bzw. 3, 3′ mit den Längsdrähten L verschweißt worden ist bzw. sind, werden die Zubringerhaken 14 entsprechend dem Doppelpfeil P₄ in die Querdraht-Aufnahmestellung zurückbewegt, wodurch die Ausnehmungen 15 wieder in die Einschußkanäle 11, 11′ gelangen, wo sie weitere Querdrahtpaare bzw. einen einzelnen Querdraht aufnehmen können.

Bei der Herstellung von Gittermatten mit gerader Querdrahtanzahl und gleichmäßiger Querdrahtteilung arbeitet die Schweißmaschine wie folgt:

Bei jedem Arbeitstakt der Schweißmaschine wird ein Querdrahtpaar Q1, Q2 mit der Längsdrahtschar verschweißt, wobei die Vorschubstrecke V der Längsdrähte genau dem doppelten Betrag des Abstandes der Querdrähte innerhalb eines Querdrahtpaares entspricht. Nachdem eine Gittermatte durch Verschweißen einer durch die Anzahl der Querdrähte festgelegten Anzahl von Querdrahtpaaren mit den Längsdrähten fertiggestellt ist, werden im folgenden Arbeitstakt die Längsdrähte um eine vorzugsweise kürzere Vorschubstrecke vorgeschoben. Hiedurch entsteht zwischen der fertiggeschweißten Gittermatte und der folgenden Gittermatte eine sogenannte Schnitteilung Vₛ, deren Abstand entsprechend dem gewünschten Längsdrahtüberstand je Gittermatte frei wählbar ist und innerhalb welcher zum Trennen des Drahtgitters in einzelne Gittermatten die Längsdrähte in einer der Schweißmaschine nachgeschalteten Schneideeinrichtung durchtrennt werden.

Nach dem erfindungsgemäßen Verfahren wird ein einzelner Querdraht Q wie folgt mit den Längsdrähten verschweißt: Wie in Fig. 1 dargestellt, wird beispielsweise nach dem Verschweißen eines Querdrahtpaares Q1, Q2 im folgenden Arbeitstakt der Schweißmaschine nur ein einzelner Querdraht Q mit Hilfe der Zubringerhaken 14 von einem Einschußkanal in eine Schweißlinie übergeführt und je nach gewünschter Querdrahtteilung werden während dieses Überführvorganges die Längsdrähte um die Auszugsteilung V vorgeschoben.

Der andere Querdrahteinschußkanal wird dabei nicht bestückt, so daß auch in der entsprechenden Schweißlinie kein Querdraht vorhanden ist. Beim Verschweißen eines einzelnen Querdrahtes Q fließt bei jedem Längsdraht der Schweißstrom von einem Pol der Schweißstromversorgung über den Elektrodenhalter 6, die Unterelektrode 3, durch den Querdraht Q, den Längsdraht L in die dazugehörige Oberelektrode 2, anschließend durch die Strombrücke 4, die andere Oberelektrode 2′, den Längsdraht L und über die entsprechende Unterelektrode 3′ und den Elektrodenhalter 6′ zum anderen Pol der Schweißstromversorgung zurück.

Um bei Fehlen eines Querdrahtes die unterschiedlichen Materialstärken in den Schweißlinien während des Schweißvorganges ausgleichen und um auch in der nicht mit einem Querdraht versehenen Schweißlinie einen guten elektrischen Kontakt zwischen den Elektroden und dem Längsdraht herstellen zu können, müssen die Strombrücken 4 um eine parallel zu den Querdrähten verlaufende Drehachse 16 schwenkbar gelagert sein. Außerdem sind die Elektroden derart gestaltet, beispielsweise an den Kanten abgerundet, daß eine Verletzung der Längsdrähte durch die Schräglage der Oberelektroden 2, 2′ relativ zu den Unterelektroden 3, 3′ vermieden wird.

Im darauffolgenden Arbeitstakt der Schweißmaschine kann entweder ein weiterer Einzeldraht, wie in Fig. 1 dargestellt, oder ein folgendes Querdrahtpaar Q1′, Q2′, wie in Fig. 2 dargestellt, mit der Längsdrahtschar verschweißt werden. Im Ausführungsbeispiel gemäß Fig. 2 ist dieses nachfolgende Querdrahtpaar Q1′, Q2′ der Anfang einer folgenden Gittermatte, so daß die Vorschubstrecke Vₛ als sogenannte Schnitteilung zwischen zwei Gittermatten entsprechend den üblichen kurzen Längsdrahtüberständen in den Gittermatten sehr klein gewählt werden kann.

Das erläuterte Ausführungsbeispiel kann im Rahmen des allgemeinen Erfindungsgedankens verschiedentlich abgewandelt werden. Um beim Verschweißen eines einzelnen Querdrahtes mit den Längsdrähten die in Fig. 1 übertrieben dargestellte Auslenkung der Längsdrähte aus der Zuführebene zu vermeiden, können anstelle der Strombrücken 4 die Elektrodenhalter 6, 6′ um eine quer zur Längsdrahtvorschubrichtung P₁ verlaufende Drehachse schwenkbar gelagert sein. Eine Zuführung der Querdrähte oberhalb der Zuführebene der Längsdrähte ist ebenfalls möglich.

Im Rahmen der Erfindung ist es außerdem möglich, jeweils eine Reihe von Elektroden höhenverschiebbar oder höhenverstellbar auszubilden, um bei Fehlen des Querdrahtes in einer Schweißlinie die unterschiedlichen Materialstärken in den Schweißlinien während des Schweißvorganges auszugleichen. Dabei wird vorzugsweise diejenige Elektrodenreihe höhenverschiebbar bzw. höhenverstellbar ausgebildet, die sich in der Schweißlinie mit fehlendem Querdraht und außerdem auf derselben Seite der Längsdrahtschar befindet, auf der die Querdrähte zugeführt werden.

Anstelle der die Oberelektroden 2 und 2′ starr verbindenden schwenkbaren Strombrücken 4 können als Oberelektroden zwei einzelne Reihen von Oberelektroden vorgesehen werden, die beide zwecks Ausgleich der unterschiedlichen Materialstärken in den Schweißlinien beim Verschweißen eines einzelnen Querdrahtes unabhängig voneinander einzeln gesteuert höhenverschiebbar ausgebildet sind. Die elektrische Verbindung der zusammengehörigen Oberelektroden 2 und 2′ erfolgt dabei durch flexible Strombrücken, beispielsweise flexible Kupferbänder. Anstelle der Oberelektrodenreihen können auch die beiden Reihen der Unterelektroden mit ihren jeweiligen Gegenhaltern unabhängig voneinander einzeln gesteuert höhenverschiebbar ausgebildet sein.

## Patentansprüche

1. Verfahren zum Herstellen von Drahtgittern aus einander rechtwinkelig kreuzenden Längs- und Querdrähten unter Anwendung des Doppelpunktschweißprinzips mit in Längsdrahtrichtung verlaufenden Strombrücken, bei welchem die Querdrähte entlang zweier, in vorbestimmtem Abstand angeordneter, quer zur Längsdrahtvorschubrichtung verlaufender Einschußkanäle seitlich zugeführt und anschließend auf einer Seite der durch die Längsdrahtschar definierten Längsdrahtzuführebene in quer zur Längsdrahtvorschubrichtung mit gegenseitigem einstellbaren Abstand verlaufende Schweißlinien aus jeweils zwei oberhalb und unterhalb der Längsdrahtzuführebene vorgesehenen Schweißelektrodenreihen übergeführt werden, wobei die Längsdrähte mit zur Überführbewegung der Querdrähte unterschiedlicher Dauer und Geschwindigkeit vorgeschoben werden und das fertige Drahtgitter nach dem Verschweißen der Drähte aus den Schweißlinien ausgeschoben wird, dadurch gekennzeichnet, daß über die Einschußkanäle wahlweise Querdrahtpaare oder einzelne Querdrähte zugeführt, in die Schweißlinie übergeführt und mit den Längsdrähten verschweißt werden, wobei die Längsdrähte um eine wählbare Vorschubstrecke vorgeschoben werden und wobei beim Verschweißen nur eines Querdrahtes mit den Längsdrähten die unterschiedliche Materialstärke in den beiden Schweißlinien beim Schweißvorgang durch Lageveränderung zumindest einer Elektrodenreihe relativ zu den übrigen Elektrodenreihen ausgeglichen wird.

2. Verfahren nach Anspruch 1, dadurch gekennzeichnet, daß die Lageveränderung der Elektrodenreihe durch Verschwenken von die Elektroden der beiden Elektrodenreihen auf einer Seite der Längsdrahtzuführebene fest und elektrisch leitend verbindenden Strombrücken um eine quer zur Längsdrahtvorschubrichtung verlaufende Drehachse erfolgt.

3. Verfahren nach Anspruch 1, dadurch gekennzeichnet, daß die Lageveränderung der Elektrodenreihe durch Höhenverschiebung jener auf der Querdrahtzuführseite der Längsdrahtzuführebene befindlichen Elektrodenreihe der Schweißlinie erfolgt, in welcher der Querdraht fehlt.
